(19) Europäisches Patentamt
European Patent Office
Office européen des brevets

(11) **EP 4 600 695 A1**

(12) **EUROPEAN PATENT APPLICATION**
published in accordance with Art. 153(4) EPC

(43) Date of publication:
**13.08.2025 Bulletin 2025/33**

(21) Application number: **22961433.4**

(22) Date of filing: **06.10.2022**

(51) International Patent Classification (IPC):
***G01S 13/28*** *(2006.01)*

(52) Cooperative Patent Classification (CPC):
**G01S 13/28**

(86) International application number:
**PCT/JP2022/037445**

(87) International publication number:
**WO 2024/075246 (11.04.2024 Gazette 2024/15)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **MITSUBISHI ELECTRIC
CORPORATION**
**Chiyoda-ku**
**Tokyo 100-8310 (JP)**

(72) Inventors:
• **YOSHIKO, Hisashi**
**Tokyo 100-8310 (JP)**
• **FUKAMACHI, Koki**
**Tokyo 100-8310 (JP)**

(74) Representative: **Mewburn Ellis LLP**
**Aurora Building**
**Counterslip**
**Bristol BS1 6BX (GB)**

(54) **RADAR DEVICE**

(57) A radar device that successively transmits a plurality of transmit pulses into space, sequentially receives reflected signals from targets, and measures ranges to the targets and Doppler frequencies includes a radar signal generation unit (50). The radar signal generation unit (50) includes a code generation unit (1) that generates codes that are fundamental; a spacing modulation unit (11) that modulates spacings between the codes generated by the code generation unit (1) and generates N code sequences that are uncorrelated with each other (where N is an integer greater than or equal to 2); and a transmission unit (2) that upconverts and amplifies the code sequences generated by the spacing modulation unit (11) and generates a transmission signal designed to radiate M code modulated transmit pulses per observation time at pulse repetition intervals (where M is an integer greater than or equal to N).

## Description

Field

The present disclosure relates to a radar device that successively transmits a plurality of transmit pulses into space, sequentially receives reflected signals from targets, and measures ranges to the targets and Doppler frequencies.

Background

Pulse-Doppler radar devices that utilize coded pulse compression techniques (abbreviated for convenience as "coded pulse radar devices" or simply as "radar devices" below) have been known for purposes of increasing transmission power and preventing degradation in range resolution (refer to, for example, Non-Patent Literature 1 below).

In a coded pulse radar device indicated in Non-Patent Literature 1 below, the following processing is performed.

(1) A transmit pulse within which code sequence-based phase modulation (referred to as "code modulation" below) is applied at time intervals that are each shorter than the transmit pulse is generated.
(2) The code modulated transmit pulse is radiated from an antenna into space P times (where P is a positive integer), once for each pulse repetition interval (hereinafter abbreviated as "PRI" as appropriate).
(3) Signal pulses reflected from targets are received and converted into digital video signals. Using the code sequence (with a code count (i.e., symbol count) of L and a bandwidth B per code) used during the transmit pulse generation as a reference function, the converted digital video signals are correlated with the reference function. Through this correlation processing, pulse hit signals that each carry range information are obtained at P points for each time delay. This correlation processing, namely the correlation processing using the code sequence as the reference function, is referred to as "pulse compression (processing)".
(4) For each time delay, a P-point discrete Fourier transform is applied to the pulse hit signals obtained from the correlation processing, thus measuring a range to each target and measuring a Doppler frequency on the basis of a phase change in a pulse hit direction.

Citation List

Non-Patent Literature

Non-Patent Literature 1: George W. Stimson, "INTRODUCTION TO AIRBORNE RADAR, SECOND EDITION", 1998, pp. 169-176, pp. 209-246

Summary of Invention

Problem to be solved by the Invention

However, in the above-described conventional coded pulse radar device, the code sequence applied to the transmit pulse is the same for each PRI; therefore, which code modulated transmit pulse a received pulse corresponds to among the plural successively transmitted transmit pulses may not be determined, causing "range ambiguity" that makes the range to a target unknown. The range ambiguity is a phenomenon that occurs when the time delay is greater than or equal to the PRI, leading to erroneous measurement of the range to be computed. Therefore, there is a need to inhibit the range ambiguity.

The present disclosure has been made in view of the above, and an object of the present disclosure is to obtain a radar device capable of inhibiting range ambiguity even under conditions where range ambiguities occur.

Means to Solve the Problem

In order to solve the above-described problem and achieve the object, a radar device according to the present disclosure to successively transmit a plurality of transmit pulses into space, sequentially receive reflected signals from targets, and measure ranges to targets and Doppler frequencies, the radar device comprising: a code generation unit to generate codes that are fundamental; a spacing modulation unit to modulate spacings between the codes generated by the code generation unit and generate N code sequences that are uncorrelated with each other, where N is an integer greater than or equal to 2; a transmission unit to upconvert and amplify the code sequences generated by the spacing modulation unit and generate a transmission signal for radiating M code modulated transmit pulses per observation time at pulse repetition intervals, where M is an integer greater than or equal to N; an antenna to radiate the transmission signal generated by the transmission unit into space; a reception unit to receive reflected waves from targets, detect received signals, and convert the received signals into analog video signals; an analog-to-digital (hereinafter abbreviated as "A/D") conversion unit to convert the analog video signals converted by the reception unit into digital video signals; and a range and Doppler frequency measurement unit to generate, for each of time delays, pulse hit signals that carry range information through correlation processing of the digital video signals with reference functions and measure ranges to targets and Doppler frequencies on a basis of pulse hit signals generated, the reference functions being the code sequences generated by the spacing modulation unit. The range and Doppler frequency measurement unit includes a correlation unit to generate the pulse hit signals, an ambiguity combination processing unit to rearrange outputs of the correlation unit according to each range folding, and a frequency analysis unit to perform frequency analysis on range folding pulse hit signals output from the ambiguity combination processing unit.

Effect of the Invention

The radar device according to the present disclosure has effects of inhibiting range ambiguity even under conditions where range ambiguities occur and resolving transmission blinds.

Brief Description of Drawings

FIG. 1 is a block diagram illustrating an exemplary configuration of a radar device according to the present embodiment.
FIG. 2 is a diagram illustrating a transmission signal sequence according to the present embodiment.
FIG. 3 is a diagram illustrating example code sequences according to the present embodiment.
FIG. 4 is a diagram illustrating detailed operation of an ambiguity combination processing unit included in the radar device according to the present embodiment.
FIG. 5 is a diagram illustrating in detail problem-resolving operation in the present embodiment.
FIG. 6 is a diagram illustrating why a transmission blind is resolved in the radar device according to the present embodiment.
FIG. 7 is a diagram illustrating received power in the radar device according to the present embodiment.
FIG. 8 is a diagram illustrating a basic configuration of a coded pulse radar device.
FIG. 9 is a diagram illustrating a transmission signal sequence of the coded pulse radar device illustrated in FIG. 8.
FIG. 10 is a diagram illustrating range ambiguity in the coded pulse radar device illustrated in FIG. 8.
FIG. 11 is a diagram illustrating why a transmission blind occurs in the coded pulse radar device illustrated in FIG. 8.
FIG. 12 is a diagram illustrating changes in received power when transmission blinds occur.

Description of Embodiment

With reference to the drawings, a detailed description is hereinafter provided of a radar device according an embodiment of the present disclosure.

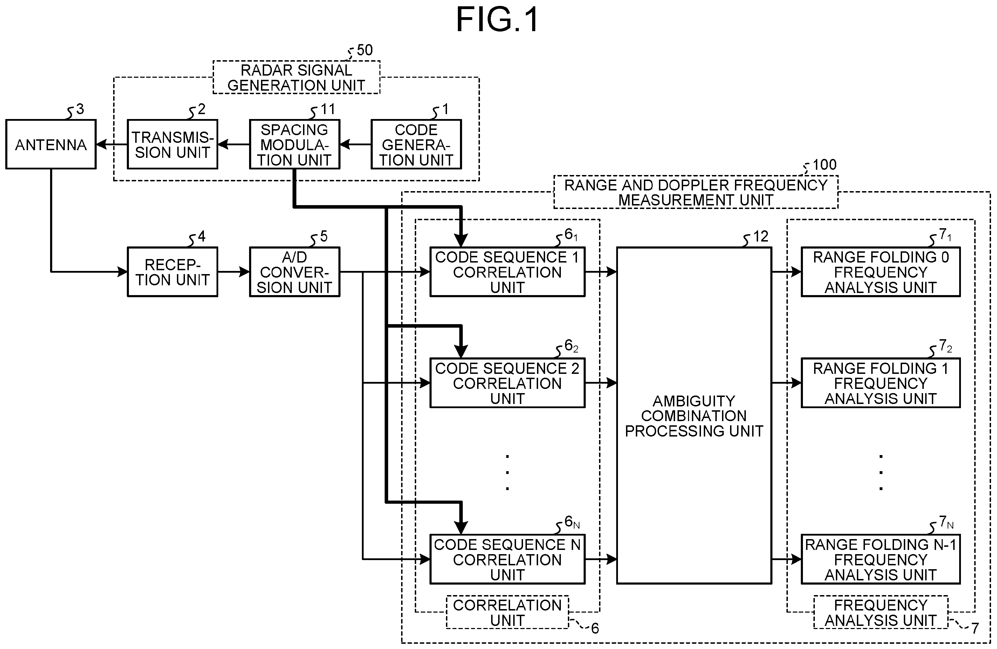

FIG. 1 is a block diagram illustrating an exemplary configuration of the radar device according to the present embodiment. The radar device according to the present embodiment includes a code generation unit 1 that generates codes that are fundamental; a spacing modulation unit 11 that modulates spacings between the codes generated by the code generation unit and generates N code sequences that are uncorrelated with each other (where N is an integer greater than or equal to 2); a transmission unit 2 that upconverts and amplifies the code sequences generated by the spacing modulation unit 11 and generates a transmission signal designed to radiate M code modulated transmit pulses per observation time at PRIs (where M is an integer greater than or equal to N); an antenna 3 that radiates the transmission signal generated by the transmission unit 2 into space; a reception unit 4 that receives reflected waves from targets, detects received signals, and converts the received signals into analog video signals; an A/D conversion unit 5 that converts the analog video signals converted by the reception unit 4 into digital video signals; a correlation unit 6 that obtains, for each of time delays, pulse hit signals that each carry range information through correlation processing of the digital video signals with reference functions, the reference functions being the code sequences generated by the spacing modulation unit 11; an ambiguity combination processing unit 12 that rearranges outputs of the correlation unit 6 according to each range folding; and a frequency analysis unit 7 that performs frequency analysis on range folding pulse hit signals output from the ambiguity combination processing unit 12.

In the above configuration, the code generation unit 1, the spacing modulation unit 11, and the transmission unit 2 constitute a radar signal generation unit 50. The radar signal generation unit 50 may serve as a radar signal generation device.

The correlation unit 6, the ambiguity combination processing unit 12, and the frequency analysis unit 7 constitute a range and Doppler frequency measurement unit 100. The correlation unit 6 includes a code sequence 1 correlation unit $6_1$, a code sequence 2 correlation unit $6_2$,..., and a code sequence N correlation unit $6_N$ that each receive an output from the A/D conversion unit 5. The frequency analysis unit 7 includes, in accordance with the configuration of the correlation unit 6, a range folding 0 frequency analysis unit $7_1$, a range folding 1 frequency analysis unit $7_2$,..., and a range folding N-1 frequency analysis unit $7_N$. Details of the processing in each of the correlation unit 6, the ambiguity combination processing unit 12, and the frequency analysis unit 7 will be described later.

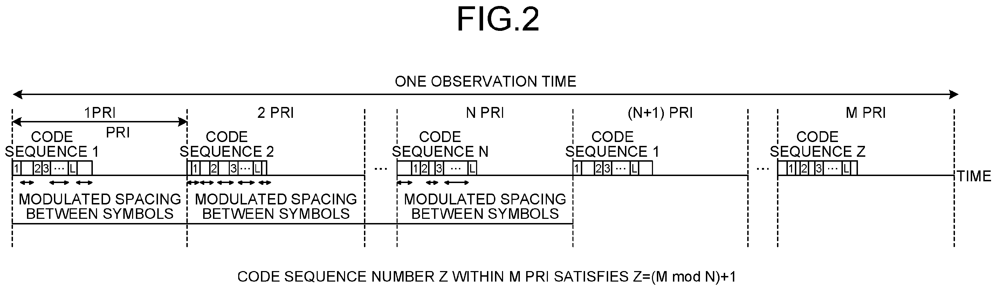

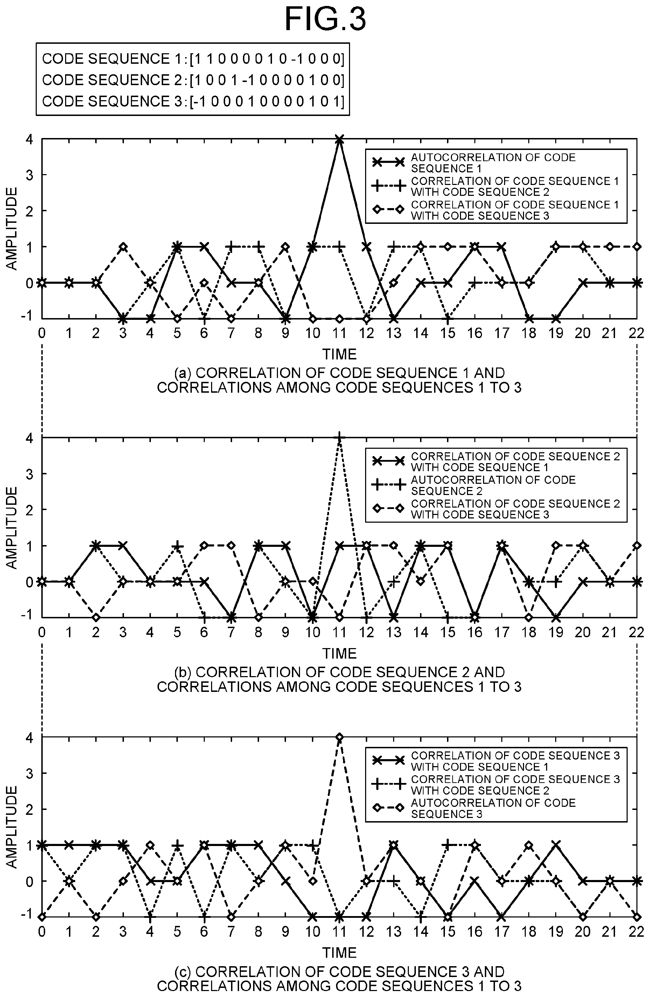

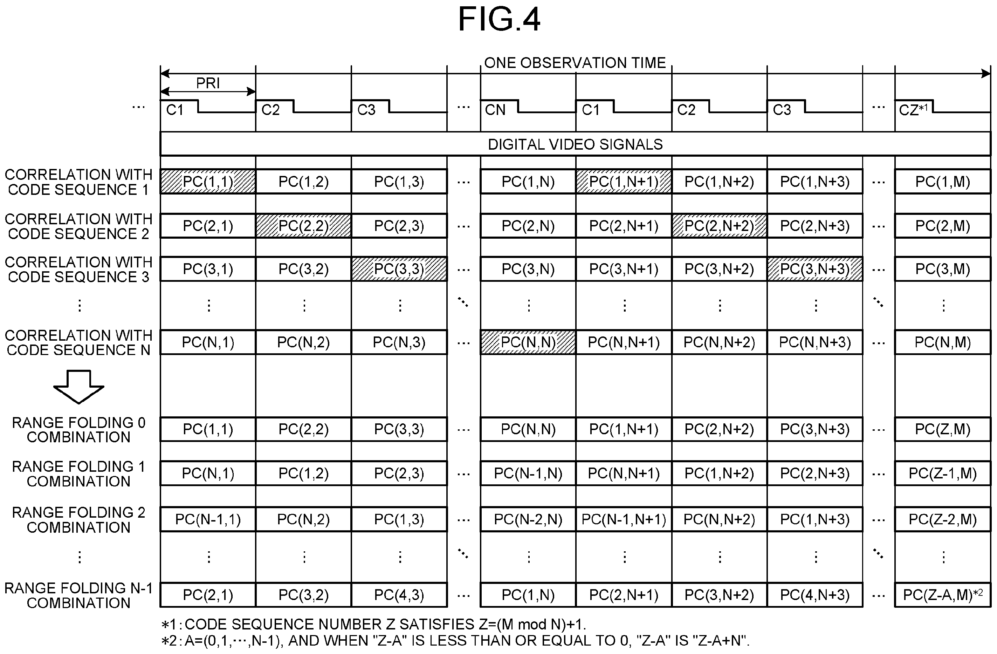

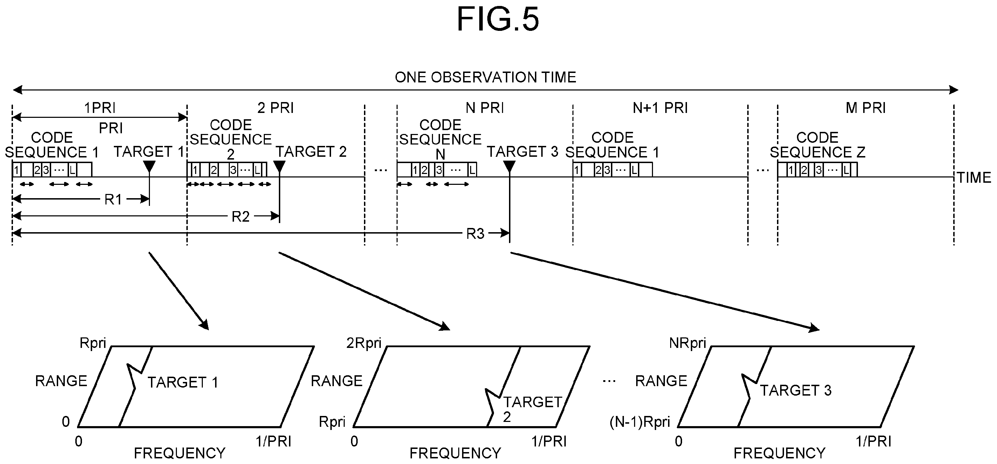

Next, with appropriate reference to FIGS. 1 to 5, a description is provided of operations of key parts of the radar device according to the present embodiment. FIG. 2 is a diagram illustrating a transmission signal sequence according to the present embodiment. FIG. 3 is a diagram illustrating example code sequences according to the present embodiment. FIG. 4 is a diagram illustrating the detailed operation of the ambiguity combination processing unit included in the radar device according to the present embodiment. FIG. 5 is a diagram illustrating in detail operation solving the problem in the present embodiment.

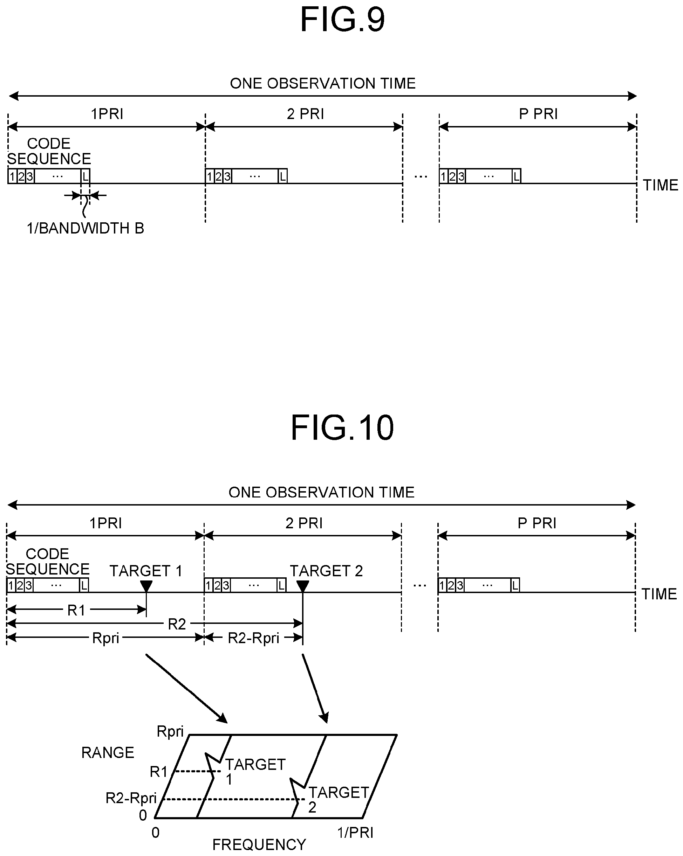

First, the code generation unit 1 generates the code sequence, which is fundamental. An example of the code sequence is, as illustrated in FIG. 9, a code sequence with a code count of L and a bandwidth B per code.

Using the code sequence generated by the code generation unit 1, the spacing modulation unit 11 generates the N types of code sequences (code sequences 1 to N) in each of which the spacing between codes is modulated. The N types of code sequences (code sequences 1 to N), which are illustrated in FIG. 2, are examples preselected as combinations that are uncorrelated with one another. The uncorrelated combinations mentioned here refer to combinations illustrated in FIG. 3. In FIG. 3, the three types are exemplified: [11000010-1000] as code sequence 1, [1001-10000100] as code sequence 2, and [-100010000101] as code sequence 3.

In FIG. 3, autocorrelations of code sequences 1, 2 and 3 reach their maximum values at a certain time (time "11" on a horizontal axis), as indicated respectively by marks $\times$ in (a), + in (b), and $\diamond$ in (c). However, correlation between code sequence 1 and code sequence 2 takes values only within a range of $\pm 1$ at all times, as indicated by marks + in (a) and $\times$ in (b) of FIG. 3. Correlation between code sequence 2 and code sequence 3 takes values only within a range of $\pm 1$ at all times, as indicated by marks $\diamond$ in (b) and + in (c) of FIG. 3. Correlation between code sequence 3 and code sequence 1 takes values only within a range of $\pm 1$ at all times, as indicated by marks $\diamond$ in (a) and $\times$ in (c) of FIG. 3.

A return is made to FIG. 2. The transmission unit 2 upconverts and amplifies code sequences 1 to N generated by the spacing modulation unit 11 and causes the antenna 3 to radiate the spacing code modulated pulses into the space at PRIs, resulting in N radiations. After the radiation of code sequence N into the space, the transmission unit 2 returns to code sequence 1 and repeats the radiations a preset number of times. In the example of FIG. 2, a total number of PRIs per observation time is set to M, where M satisfies the relation M≥N. In FIG. 2, code sequence 1 is transmitted in a time slot (N+1) PRI following the transmission of code sequence N, and code sequence Z is transmitted in M PRI, which is a last time slot of the observation time. When, as in the example of the present embodiment, code sequences 1 to N repeat consistently in this order, Z, which represents the code sequence number in the time slot M PRI, can be expressed by the following formula.

$$Z = (M \bmod N) + 1$$

In the above formula, "M mod N" represents a remainder after dividing the integer M by the integer N.

As illustrated in FIG. 1, the converted digital video signals from the A/D conversion unit 5 are converted into range and Doppler frequency signals by the correlation unit 6. Using code sequence 1 generated by the spacing modulation unit 11 as the reference function, the code sequence 1 correlation unit $6_1$ performs correlation processing of the digital video signal with the reference function. Using code sequence 2 generated by the spacing modulation unit 11 as the reference function, the code sequence 2 correlation unit $6_2$ performs correlation processing of the digital video signal with the reference function. Similar processing is sequentially performed, with the code sequence N correlation unit $6_N$ performing correlation processing of the digital video signal with the reference function, using code sequence N generated by the spacing modulation unit 11 as the reference function. This correlation processing is also referred to as "pulse compression processing".

The ambiguity combination processing unit 12 performs rearrangement processing on correlation results computed by the code sequence 1 correlation unit $6_1$ through the code sequence N correlation unit $6_N$.

A description of the details of the rearrangement processing is provided with reference to FIGS. 2 and 4. First of all, as illustrated in FIG. 2, one observation time is composed of M sections 1 PRI to M PRI. The M divided sections of the observation time are defined as PRI signal sections. Each PRI signal section has a width corresponding to a generation cycle in which the digital video signal is generated for each transmit pulse. The result of correlation between the p-th digital video signal (C1, C2,..., CN, C1, C2,..., CZ) (where p=1, 2,..., M) and code sequence n (where n=1, 2,..., N) is represented as PC(n,p). For example, in FIG. 4, the result of correlation between code sequence 1 and the digital video signal C1 is represented as "PC(1,1)", and the result of correlation between code sequence 1 and the (N+1)-th digital video signal C1 is represented as "PC(1,N+1)". The other results are represented in the same manner.

With reference to FIG. 5, a description of the notation combining the term "range folding" and the "numeral" is provided here. First, the notation "range folding 0" means that a detected target does not straddle a PRI section. For example, in FIG. 5, if the detection of target 2 in the signal section denoted by 2 PRI is due to the signal pulse representing code sequence 2, the detection does not span across plural PRI sections. Therefore, this case corresponds to no range folding and is classified as "range folding 0". On the other hand, if the detection of target 2 in the signal section denoted by 2 PRI is due to the signal pulse representing code sequence 1, the detection spans across two PRI sections. Therefore, this case corresponds to range folding and is classified as "range folding 1". Sequential classification into "range folding 2", "range folding 3", and so on follows. For example, if the detection of target 3 in the signal section denoted by N PRI is due to the signal pulse representing code sequence 1, the detection spans across N PRI sections. Therefore, this case is classified as "range folding N-1".

A return is made to FIG. 4. For example, if targets are present in range folding 0, PC(1,1), PC(2,2), PC(3,3),..., PC(N,N), PC(1,N+1), PC(2,N+2), PC(3,N+3),..., and PC(Z,M), which are partially hatched, have higher correlation values and, therefore, are rearranged in a pulse hit direction, resulting in acquisition of a range folding 0 pulse hit signal. Similarly, if targets are present in range folding 1, meaning that the transmission signal is delayed by one PRI, PC(N,1), PC(1,2), PC(2,3),..., PC(N-1,N), PC(N,N+1), PC(1,N+2), PC(2,N+3),..., and PC(Z-1,M) have higher correlation values and, therefore, are rearranged in a pulse hit direction, resulting in acquisition of a range folding 1 pulse hit signal. Similarly, if targets are present in range folding N-1, meaning that the transmission signal is delayed by (N-1) PRIs, PC(2,1), PC(3,2), PC(4,3),..., PC(1,N), PC(2,N+1), PC(3,N+2), PC(4,N+3), ..., and PC(Z-N+1,M) have higher correlation values and, therefore, are rearranged in a pulse hit direction, resulting in acquisition of a range folding N-1 pulse hit signal.

The range folding 0 frequency analysis unit $7_1$, the range folding 1 frequency analysis unit $7_2$, and the range folding N-1 frequency analysis unit $7_N$ of the frequency analysis unit 7 apply an L-point discrete Fourier transform to the range folding 0, range folding 1, and range folding N-1 pulse hit signals obtained from the ambiguity combination processing unit 12, in the respective pulse hit directions, thus measuring Doppler frequencies. It is to be noted that the L-point discrete Fourier transform is an example, and a different frequency analysis method may be used.

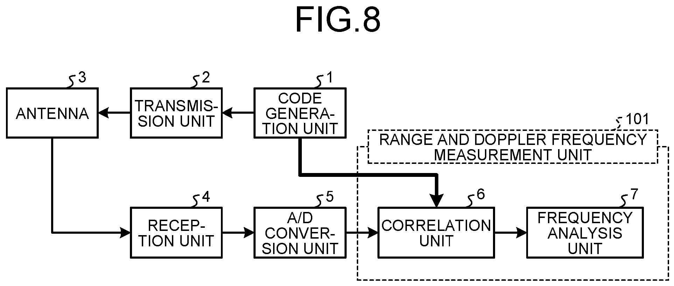

Next, with reference to FIG. 5, and FIGS. 8 to 10, a description of a unique effect of the radar device according to the present embodiment is provided. Note here that FIG. 8 is a diagram illustrating a basic configuration of a coded pulse radar device. FIG. 9 is a diagram illustrating a transmission signal sequence of the coded pulse radar device illustrated in FIG. 8. FIG. 10 is a diagram illustrating range ambiguity in the coded pulse radar device illustrated in FIG. 8.

First of all, the basic configuration of the coded pulse radar device, as illustrated in FIG. 8, does not include the spacing modulation unit 11 illustrated in FIG. 1, nor does the configuration include the ambiguity combination processing unit 12 illustrated in FIG. 1 within a range and Doppler frequency measurement unit 101. Furthermore, the correlation unit 6 does not internally include the code sequence 1 correlation unit $6_1$, the code sequence 2 correlation unit $6_2$, ..., and the code sequence N correlation unit $6_N$ that are illustrated in FIG. 1. Similarly, the frequency analysis unit 7 does not internally include the range folding 0 frequency analysis unit $7_1$, the range folding 1 frequency analysis unit $7_2$,..., and the range folding N-1 frequency analysis unit $7_N$.

FIG. 9 illustrates the example transmission signal sequence when the coded pulse radar device illustrated in FIG. 8 is used. According to the example of FIG. 9, the code sequence with the code count of L and the bandwidth B per code (with a time width of 1/bandwidth B) is transmitted P times per observation time. In the case of FIG. 9, the "range ambiguity" described in the Background section occurs. FIG. 10 illustrates an example in which the range ambiguity occurs. As illustrated in the drawing, when target 1 with a time delay within 1 PRI and target 2 with a time delay within 2 PRI are present, identifying which code sequence a reflected wave from target 2 corresponds to may not be possible because the code sequence applied to the transmit pulse is the same for each PRI. In this case, while a range R1 can be correctly measured for target 1, for target 2, a range to target 2 becomes an apparent range R2-Rpri. In other words, the range ambiguity occurs in the range measurement of target 2, resulting in erroneous measurement.

In contrast, the radar device according to the present embodiment inhibits range ambiguities even when target 1, target 2, and target 3 are located, as illustrated in FIG. 5, at a range folding 0 point, a range folding 1 point, and a range folding N-1 point, respectively (with both targets 2 and 3 being in a condition where range ambiguity occurs), allowing for the measurement of ranges to targets 2 and 3. While FIG. 5 exemplifies the two cases of range folding for the targets, the example of FIG. 5 is not limiting. Range foldings 0 to N-1 for the targets can be identified.

Therefore, for the radar device according to the present embodiment, a range where range ambiguity does not occur (range ambiguity-free range) is extended to the code sequence count times (in the example of the present embodiment, N times) a range ambiguity-free range of the conventional coded pulse radar device. The range ambiguity-free range of the radar device according to the present embodiment, which is represented by Rmax, can be expressed by the following formula using speed c of light.

$$\mathrm{Rmax} = (c/2) \cdot \mathrm{PRI} \cdot N$$

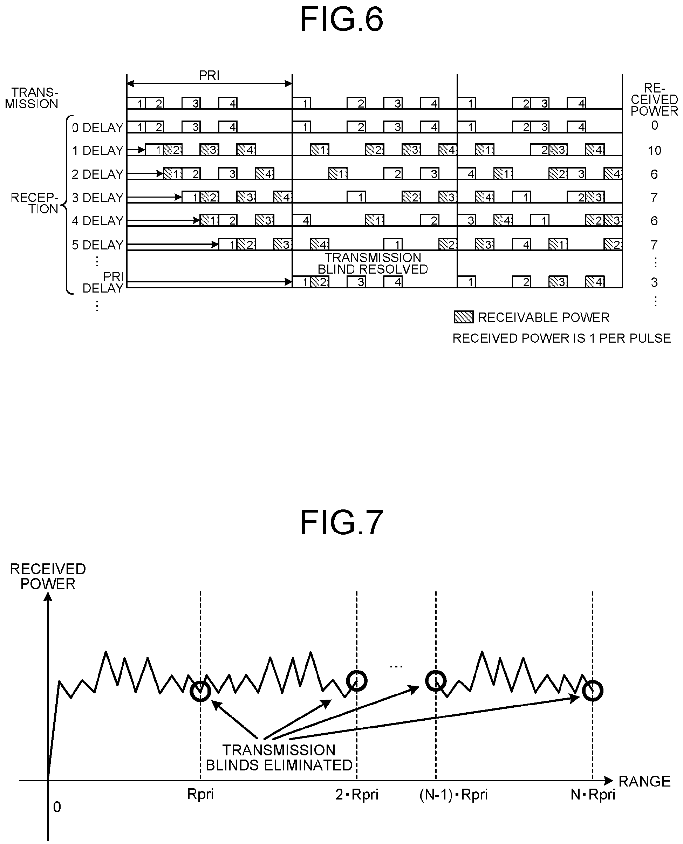

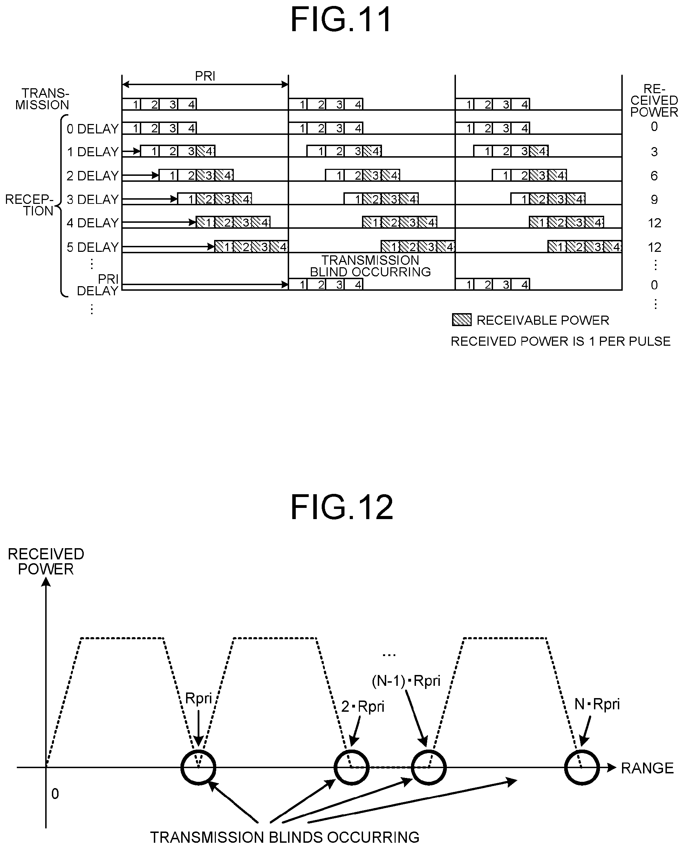

Lastly, with reference to FIGS. 6, 7, 11 and 12, a description of an incidental effect of the radar device according to the present embodiment is provided. FIG. 6 is a diagram explaining why a transmission blind is resolved in the radar device according to the present embodiment, schematically illustrating transmission timing of the transmission signal and reception timing of received signals. FIG. 7 is a diagram illustrating received power in the case of FIG. 6, showing a relationship between the received power and the range. FIG. 11, on the other hand, is a diagram illustrating why a transmission blind occurs in the coded pulse radar device illustrated in FIG. 8. FIG. 12 is a diagram illustrating changes in received power when transmission blinds occur.

First, a problem with the coded pulse radar device illustrated in FIG. 8 is that since the same pulse is transmitted for each PRI, the transmission blind can occur, causing the received power from a target to become zero during the pulse transmission. In FIG. 11, "0 DELAY", "1 DELAY", "2 DELAY", "3 DELAY", "4 DELAY", "5 DELAY",..., and "PRI DELAY" indicate, in relation to the transmit pulses, reception states corresponding to ranges to targets. For example, at positions that are integer multiples of the PRI, such as "0 DELAY" and "PRI DELAY", the transmit and received pulses align, causing the received power to be zero. On the other hand, in the cases of "4 DELAY" and "5 DELAY", since the transmit and received pulses do not align, the received power becomes 12 (=4×3) over three PRI sections. Similar computations can be performed for "1 DELAY", "2 DELAY", and "3 DELAY".

In FIG. 12, the received power illustrated on a right side of FIG. 11 is plotted as a waveform. As indicated by black circles in the drawing, transmission blinds occur at ranges (Rpri, 2·Rpri,..., (N-1)·Rpri, and N·Rpri) corresponding to integer multiples of the PRI. In other words, at the positions that are the integer multiples of the PRI, the received power becomes zero, rendering the coded pulse radar device illustrated in FIG. 8 incapable of target detection.

In contrast, the radar device according to the present embodiment eliminates the transmission blinds at the PRI intervals because the spacing modulation unit 11 modulates the spacing between the codes. In FIG. 6, at "1 DELAY", for example, ten received pulses indicated by hatching do not align with transmit pulses and, therefore, can be received. At subsequent "2 DELAY", "3 DELAY", "4 DELAY", "5 DELAY", and "PRI DELAY", received pulses that do not align with transmit pulses are similarly indicated by hatching, with received power values shown on a right side. In FIG. 7, the received power illustrated on the right side of FIG. 6 is plotted as a waveform. As indicated by black circles in FIG. 7, the transmission blinds at the PRI intervals are eliminated. Therefore, even at the intervals that are the integer multiples of the PRI, the received power does not become zero, rendering the radar device according to the present embodiment capable of target detection.

The above configuration illustrated in the embodiment is illustrative, can be combined with other techniques that are publicly known, and can be partly omitted or changed without departing from the gist.

Reference Signs List

1 code generation unit; 2 transmission unit; 3 antenna; 4 reception unit; 5 A/D conversion unit; 6 correlation unit; $6_1$ code sequence 1 correlation unit; $6_2$ code sequence 2 correlation unit; $6_N$ code sequence N correlation unit; 7 frequency analysis unit; $7_1$ range folding 0 frequency analysis unit; $7_2$ range folding 1 frequency analysis unit; $7_N$ range folding N-1 frequency analysis unit; 11 spacing modulation unit; 12 ambiguity combination processing unit; 100, 101 range and Doppler frequency measurement unit.

**Claims**

1. A radar device to successively transmit a plurality of transmit pulses into space, sequentially receive reflected signals from targets, and measure ranges to targets and Doppler frequencies, the radar device comprising:

    a code generation unit to generate codes that are fundamental;
    a spacing modulation unit to modulate spacings between the codes generated by the code generation unit and generate N code sequences that are uncorrelated with each other, where N is an integer greater than or equal to 2;
    a transmission unit to upconvert and amplify the code sequences generated by the spacing modulation unit and generate a transmission signal for radiating M code modulated transmit pulses per observation time at pulse repetition intervals, where M is an integer greater than or equal to N;
    an antenna to radiate the transmission signal generated by the transmission unit into space;
    a reception unit to receive reflected waves from targets, detect received signals, and convert the received signals into analog video signals;
    an analog-to-digital conversion unit to convert the analog video signals converted by the reception unit into digital video signals; and
    a range and Doppler frequency measurement unit to generate, for each of time delays, pulse hit signals that carry range information through correlation processing of the digital video signals with reference functions and measure ranges to targets and Doppler frequencies on a basis of pulse hit signals generated, the reference functions being the code sequences generated by the spacing modulation unit, wherein
    the range and Doppler frequency measurement unit includes
    a correlation unit to generate the pulse hit signals,
    an ambiguity combination processing unit to rearrange outputs of the correlation unit according to each range folding, and
    a frequency analysis unit to perform frequency analysis on range folding pulse hit signals output from the ambiguity combination processing unit.

2. The radar device according to claim 1, wherein

    the correlation unit
    uses each of the code sequences from a first pulse to an N-th pulse generated by the spacing modulation unit as a reference signal and correlates a received signal with a reference signal for a corresponding one of the pulses in performing pulse-specific target detection processing.

# FIG.1

# FIG.2

ONE OBSERVATION TIME

| 1PRI | 2 PRI | N PRI | (N+1) PRI | M PRI |
|---|---|---|---|---|

PRI

CODE SEQUENCE 1

CODE SEQUENCE 2

CODE SEQUENCE N

CODE SEQUENCE 1

CODE SEQUENCE Z

MODULATED SPACING BETWEEN SYMBOLS

MODULATED SPACING BETWEEN SYMBOLS

MODULATED SPACING BETWEEN SYMBOLS

TIME

CODE SEQUENCE NUMBER Z WITHIN M PRI SATISFIES Z=(M mod N)+1

# FIG.3

CODE SEQUENCE 1:[1 1 0 0 0 0 1 0 -1 0 0 0]
CODE SEQUENCE 2:[1 0 0 1 -1 0 0 0 0 1 0 0]
CODE SEQUENCE 3:[-1 0 0 0 1 0 0 0 0 1 0 1]

(a) CORRELATION OF CODE SEQUENCE 1 AND
CORRELATIONS AMONG CODE SEQUENCES 1 TO 3

(b) CORRELATION OF CODE SEQUENCE 2 AND
CORRELATIONS AMONG CODE SEQUENCES 1 TO 3

(c) CORRELATION OF CODE SEQUENCE 3 AND
CORRELATIONS AMONG CODE SEQUENCES 1 TO 3

# FIG.4

EP 4 600 695 A1

ONE OBSERVATION TIME

PRI

| | C1 | C2 | C3 | ... | CN | C1 | C2 | C3 | ... | CZ*1 |
|---|---|---|---|---|---|---|---|---|---|---|
| DIGITAL VIDEO SIGNALS | | | | | | | | | | |
| CORRELATION WITH CODE SEQUENCE 1 | PC(1,1) | PC(1,2) | PC(1,3) | ... | PC(1,N) | PC(1,N+1) | PC(1,N+2) | PC(1,N+3) | ... | PC(1,M) |
| CORRELATION WITH CODE SEQUENCE 2 | PC(2,1) | PC(2,2) | PC(2,3) | ... | PC(2,N) | PC(2,N+1) | PC(2,N+2) | PC(2,N+3) | ... | PC(2,M) |
| CORRELATION WITH CODE SEQUENCE 3 | PC(3,1) | PC(3,2) | PC(3,3) | ... | PC(3,N) | PC(3,N+1) | PC(3,N+2) | PC(3,N+3) | ... | PC(3,M) |
| ⋮ | ⋮ | ⋮ | ⋮ | ⋱ | ⋮ | ⋮ | ⋮ | ⋮ | ⋱ | ⋮ |
| CORRELATION WITH CODE SEQUENCE N | PC(N,1) | PC(N,2) | PC(N,3) | ... | PC(N,N) | PC(N,N+1) | PC(N,N+2) | PC(N,N+3) | ... | PC(N,M) |
| RANGE FOLDING 0 COMBINATION | PC(1,1) | PC(2,2) | PC(3,3) | ... | PC(N,N) | PC(1,N+1) | PC(2,N+2) | PC(3,N+3) | ... | PC(Z,M) |
| RANGE FOLDING 1 COMBINATION | PC(N,1) | PC(1,2) | PC(2,3) | ... | PC(N-1,N) | PC(N,N+1) | PC(1,N+2) | PC(2,N+3) | ... | PC(Z-1,M) |
| RANGE FOLDING 2 COMBINATION | PC(N-1,1) | PC(N,2) | PC(1,3) | ... | PC(N-2,N) | PC(N-1,N+1) | PC(N,N+2) | PC(1,N+3) | ... | PC(Z-2,M) |
| ⋮ | ⋮ | ⋮ | ⋮ | ⋱ | ⋮ | ⋮ | ⋮ | ⋮ | ⋱ | ⋮ |
| RANGE FOLDING N-1 COMBINATION | PC(2,1) | PC(3,2) | PC(4,3) | ... | PC(1,N) | PC(2,N+1) | PC(3,N+2) | PC(4,N+3) | ... | PC(Z-A,M)*2 |

*1: CODE SEQUENCE NUMBER Z SATISFIES Z=(M mod N)+1.
*2: A=(0,1,···,N-1), AND WHEN "Z-A" IS LESS THAN OR EQUAL TO 0, "Z-A" IS "Z-A+N".

# FIG.5

ONE OBSERVATION TIME

EP 4 600 695 A1

# FIG.6

| | | | | RE-CEIVED POWER |
|---|---|---|---|---|
| TRANS-MISSION | 1 2 3 4 | 1 2 3 4 | 1 2 3 4 | |
| 0 DELAY | 1 2 3 4 | 1 2 3 4 | 1 2 3 4 | 0 |
| 1 DELAY | 1 2 3 4 | 1 2 3 4 | 1 2 3 4 | 10 |
| 2 DELAY | 1 2 3 4 | 1 2 3 4 1 2 3 4 | 6 |
| RECEP-TION 3 DELAY | 1 2 3 4 | 1 2 3 4 1 2 3 | 7 |
| 4 DELAY | 1 2 3 4 1 2 3 4 1 2 3 | 6 |
| 5 DELAY | 1 2 3 4 1 2 3 4 1 2 | 7 |
| ⋮ PRI DELAY | TRANSMISSION BLIND RESOLVED 1 2 3 4 | 1 2 3 4 | 3 |
| ⋮ | | | | ⋮ |

▨ RECEIVABLE POWER

RECEIVED POWER IS 1 PER PULSE

# FIG.7

RECEIVED POWER

TRANSMISSION BLINDS ELIMINATED

0    Rpri    2·Rpri    (N-1)·Rpri    N·Rpri    RANGE

# FIG.8

# FIG.9

# FIG.10

# FIG.11

| | | | | | RE-CEIVED POWER |
|---|---|---|---|---|---|

RECEIVABLE POWER

RECEIVED POWER IS 1 PER PULSE

# FIG.12

TRANSMISSION BLINDS OCCURRING

## INTERNATIONAL SEARCH REPORT

| International application No. |
|---|
| **PCT/JP2022/037445** |

| A. | CLASSIFICATION OF SUBJECT MATTER |
|---|---|

*G01S 13/28*(2006.01)i
FI:    G01S13/28 210

According to International Patent Classification (IPC) or to both national classification and IPC

| B. | FIELDS SEARCHED |
|---|---|

Minimum documentation searched (classification system followed by classification symbols)

G01S7/00-7/42; G01S13/00-13/95;

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | US 2013/0278455 A1 (SONG, William S.) 24 October 2013 (2013-10-24)<br>entire text, all drawings | 1-2 |
| A | JP 2006-118924 A (TDK CORP) 11 May 2006 (2006-05-11)<br>entire text, all drawings | 1-2 |
| A | CN 109683143 A (XIDIAN UNIVERSITY) 26 April 2019 (2019-04-26)<br>entire text, all drawings | 1-2 |
| A | US 5023888 A (BAYSTON, Thomas E.) 11 June 1991 (1991-06-11)<br>entire text, all drawings | 1-2 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **16 November 2022** | **06 December 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/037445**

| Patent document cited in search report | | | Publication date (day/month/year) | Patent family member(s) | | | Publication date (day/month/year) |
|---|---|---|---|---|---|---|---|
| US | 2013/0278455 | A1 | 24 October 2013 | (Family: none) | | | |
| JP | 2006-118924 | A | 11 May 2006 | US | 2006/0082492 | A1 | |
| CN | 109683143 | A | 26 April 2019 | (Family: none) | | | |
| US | 5023888 | A | 11 June 1991 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **GEORGE W. STIMSON**. *INTRODUCTION TO AIR-BORNE RADAR, SECOND EDITION*, 1998, 209-246